# EUROPÄISCHE PATENTANMELDUNG

(11) **EP 1 688 961 A1**
(43) Veröffentlichungstag der Anmeldung: **09.08.2006**
(21) Anmeldenummer: 06001961.9
(22) Anmeldetag: 31.01.2006
(51) Int. Cl.: G21C 19/105

(54) **Halteelement zum Greifen und Transportieren eines Einbauteiles eines Kernreaktors**

(30) Priorität: 04.02.2005 DE 102005005516; 26.03.2005 DE 102005013983
(71) Anmelder: Framatome ANP GmbH, 91058 Erlangen (DE)
(72) Erfinder: Nahr, Wolfgang, 91056 Erlangen (DE)
(74) Vertreter: Mörtel & Höfner

(57) **Zusammenfassung**

Die Erfindung bezieht sich auf ein Halteelement zum Greifen und Transportieren eines Einbauteils eines Kernreaktors, das ein von außen zugängliches Strukturelement (32) mit zumindest einer Durchgangsöffnung (30) umfasst. Gemäß der Erfindung enthält das Halteelement eine Stützplatte (2), die an einem Kupplungsteil (4) zum Ankuppeln an eine Transportvorrichtung angeordnet ist, und die zumindest ein hohles Ankerteil (6,60), das auf der dem Kupplungsteil gegenüberliegenden Seite der Stützplatte (2) vorsteht und derart bemessen ist, dass es in die zumindest eine Durchgangsöffnung (30) des Strukturelementes (32) eingeführt werden kann, wobei das Ankerteil (6,60) nach außen ausstellbare Anschlagelemente (10,62) enthält, die bei eingeführtem Ankerteil (6, 60) und im ausgestellten Zustand das Strukturelement (32) hintergreifen.

## Beschreibung

Die Erfindung bezieht sich auf ein Halteelement zum Greifen und Transportieren eines Einbauteiles eines Kernreaktors, das ein von außen zugängliches Strukturelement mit zumindest zwei Durchgangsöffnungen umfasst. Insbesondere bezieht sich die Erfindung auf ein Halteelement zum Greifen und Transportieren eines Brennelementskelettes.

Beim Transport nuklearer Einbauteile eines Kernkraftwerkes muss in einem hohen Maße sichergestellt sein, dass Schäden in der Anlage, beispielsweise durch unbeabsichtigtes Lösen des Einbauteils vom Transportmittel, oder durch den Transport verursachte Schäden am Einbauteil praktisch ausgeschlossen sind. Da außerdem die Handhabung radioaktiver Einbauteile in einer großen Tiefe unter Wasser erfolgt, müssen die entsprechenden Werkzeuge einfach fernbedient handhabbar sein. Ein solches Einbauteil ist beispielsweise ein sogenanntes Brennelementskelett, d.h. der von einem Brennelement übriggebliebenen Teil, wenn von diesem Brennstäbe, Kopf- und Fußrahmen und gegebenenfalls der Wasserkasten entfernt worden ist.

Aus der DE 28.00 028 A1 ist ein Halteelement zum Greifen und Transportieren eines Brennelementes eines Kernreaktors bekannt, das schwenkbar gelagerte Greifarme enthält, die in eine Bohrung am Kopf des Brennelementes eingeführt werden können und dort mit Hilfe eines axial verschiebbaren und axial über die Greifarme vorstehenden Gleitstückes ausgeschwenkt werden können und im ausgeschwenkten Zustand einen in der Bohrung befindlichen ringförmigen Vorsprung hintergreifen. Bei dem aus der US 4,646,415 A bekannten Halteelement zum Greifen und Transportieren eines Kopfrahmens eines Brennelements sind Greifelemente vorgesehen, die in Führungshülsen eingeführt werden, die im Kopfrahmen angeordnet sind. Mit Hilfe eines axial verschiebbaren Endstopfens kann ein elastischer Halteblock radial ausgestellt werden, der mit der Führungshülse einen Reibschluss herstellt.

Der Erfindung liegt nun die Aufgabe zu Grunde eine Halteelement zum Greifen und Transportieren eines Einbauteils eines Kernreaktors, insbesondere eines Brennelementskelettes, anzugeben, das ein sicheres Greifen und Transportieren des Einbauteiles ermöglicht.

Die genannte Aufgabe wird gemäß der Erfindung gelöst mit einem Halteelement mit den Merkmalen des Patentanspruches 1. Gemäß dieser Merkmale enthält ein Halteelement zum Greifen und Transportieren eines Einbauteiles eines Kernreaktors, das ein von außen zugängliches Strukturelement mit zumindest einer Durchgangsöffnung umfasst, eine Stützplatte, die an einem Kupplungsteil zum Ankoppeln an eine Transportvorrichtung angeordnet ist. Die Stützplatte enthält zumindest ein hohles Ankerteil, das auf der dem Kupplungsteil gegenüberliegenden Seite der Stützplatte vorsteht und derart bemessen ist, dass es in die zumindest eine Durchgangsöffnung des Strukturelementes eingeführt werden kann, wobei das Ankerteil ein nach außen ausstellbares Anschlagelement enthält, das bei eingeführtem Ankerteil und im ausgestellten Zustand das Strukturelement hintergreift. Mit diesen Maßnahmen ist ein einfaches und sicheres Greifen des Einbauteils möglich.

Wenn das Halteelement eine Mehrzahl von Ankerteilen umfasst, die derart zueinander angeordnet sind, dass sie in eine entsprechende Mehrzahl von Durchgangsöffnungen des Strukturelementes eingeführt werden können, ist das Einbauteil auch gegen Verdrehen gesichert.

In einer vorteilhaften Ausführungsform ist das Ankerteil eine Hülse, die auf einem als Anschlagelement dienenden Abschnitt mit einer Wandschwächung, vorzugsweise in Form einer Mehrzahl von Längsschlitzen, versehen ist. In diesem Bereich kann das Ankerteil durch Druckbeaufschlagung einfach verformt werden, um auf diese Weise einen Hintergriff zu bilden.

Vorzugsweise fluchtet das Ankerteil mit einer Durchgangsöffnung in der Stützplatte, in die ein Bolzen eingeführt ist, der das Ankerteil durchsetzt und an seiner der Stützplatte abgewandten Stirnfläche hintergreift und bei Ausüben einer axialen Zugkraft den Abschnitt auf Druck beansprucht und plastisch nach außen verformt.

In einer alternativen Ausgestaltung ist das Anschlagelement durch zumindest zwei Federschenkel gebildet ist, die an ihrem freien Ende mit einer außenliegenden Schulter versehen sind. Durch diese Maßnahme ist eine sichere Verankerung möglich, ohne dass es hierzu einer plastischen Verformung bedarf.

In einer weiteren bevorzugten Ausgestaltung der Erfindung fluchtet das hohle Ankerteil mit einer Durchgangsbohrung in der Stützplatte, in die ein Bolzen eingeführt ist, der an seinem freien Ende eine Gleitschräge aufweist, die entlang einer am Innenumfang des Federschenkels angeordneten Kante gleitet und bei einer Axialverschiebung des Bolzens die Federschenkel nach außen spreizt. Durch diese Maßnahme ist ein versehentliches Lösen des Hintergriffs weitgehendst vermieden.

In einer besonders für die Handhabung eines bestrahlten, versprödeten Brennelementskelettes geeigneten Ausführungsform weist das Ankerteil eine Mehrzahl von in seiner Axialrichtung hintereinander angeordneten ausstellbaren Anschlagelementen auf. Dadurch ist ein unbeabsichtigtes Zerbrechen des Brennelementskelettes bei der Ausübung von unbeabsichtigten - beispielsweise beim Transport - oder beabsichtigten Kräften - beispielsweise bei der Zerlegung und Kompaktierung vermieden.

Weitere vorteilhafte Ausgestaltungen ergeben sich gemäß den weiteren Unteransprüchen. Zur näheren Erläuterung der Erfindung wird auf das Ausführungsbeispiel der Zeichnung verwiesen.

Es zeigen:
- Fig. 1: ein Halteelement gemäß der Erfindung in einem Längsschnitt,
- Fig. 2: in einem oberen Abstandhaltergitter eines Brennelementskelettes eine Position, in der das Halteelement im Abstandhaltergitter fixiert wird,
- Fig. 3a,b: das in die Stützplatte eingesetzte Ankerteil sowie den zugehörigen Bolzen,
- Fig. 4: eine Ausführungsform eines Halteelementes, das insbesondere zum Greifen und Transportieren eines bestrahlten Brennelementskelettes geeignet ist.

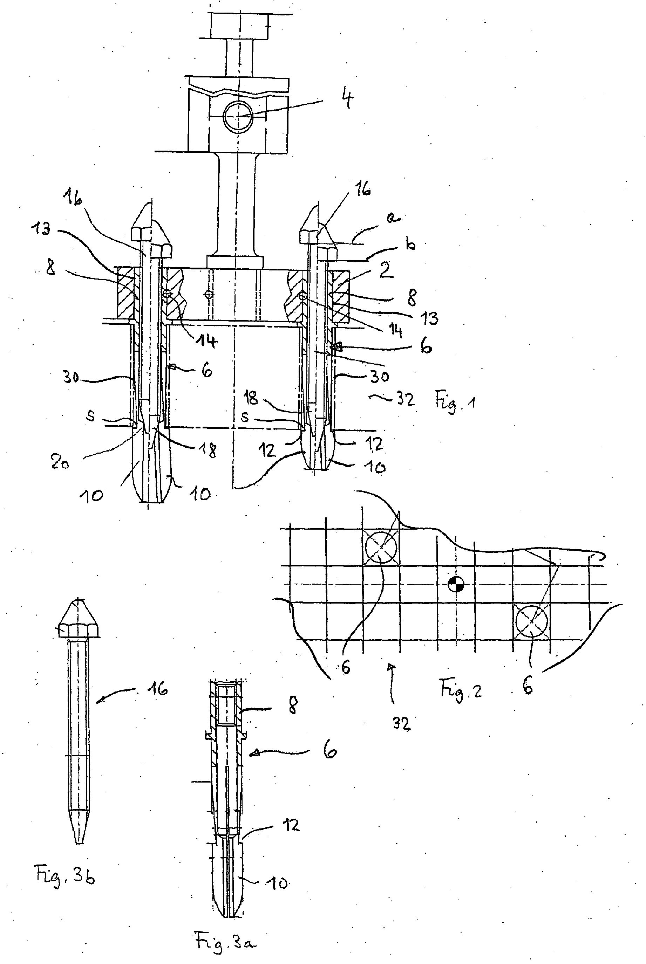

Gem. Fig. 1 umfasst das Halteelement eine Stützplatte 2, die an einem Kupplungsteil 4 zum Ankuppeln an eine in der Figur nicht dargestellte Transportvorrichtung befestigt ist. Das Kupplungsteil 4 ist dabei an die jeweils zum Einsatz vorgesehene Transportvorrichtung angepasst. In die Stützplatte 2 sind zwei hohle Ankerteile 6 eingesetzt, die auf der dem Kupplungsteil 4 gegenüberliegenden Seite der Stützplatte 2 vorstehen. Das Ankerteil 6 besteht aus einem hülsenförmigen Abschnitt 8 und sich daran anschließenden vier Federschenkeln 10, die in der Nähe ihres freien Endes mit einer außenliegenden Schulter 12 versehen sind. An ihrem freien Ende weisen die Federschenkel 10 hierzu eine Wandverstärkung auf. Die Federschenkel 10 bilden mit ihrer außenliegenden Schulter 12 ein nach außen (radial) ausstellbares Anschlagelement.

Mit seinem hülsenförmigen Abschnitt 8 ist das Ankerteil 6 in eine Durchgangsbohrung 13 der Stützplatte 2 eingesetzt und dort mechanisch durch Stifte 14 gegen Herausfallen gesichert. Ein umlaufender Ringflansch 15 dient als Anschlag beim Einsetzen des Ankerteils 6 in die Stützplatte 2.

Der hülsenförmige Abschnitt 8 ist an seinem Innenumfang mit einem Innengewinde versehen, in das ausgehend von der dem Kupplungsteil 4 zugewandten Seite der Stützplatte 2 ein Bolzen 16 eingeschraubt ist. Der Bolzen 16 weist an seinem in das Ankerteil 6 hineinragenden freien Ende eine durch eine konusförmige Spitze 18 gebildete Gleitschräge auf, die beim Einschrauben in das Ankerteil 6 mit einer innenliegenden, im Beispiel durch eine Stufe oder einen Absatz gebildete Kante 20 der Federschenkel 10 in Wirkverbindung gebracht wird. Bei weiterem Einschrauben des Schraubbolzens 16 gleitet die Kante 20 entlang der durch die konusförmige Spitze 18 gebildeten Schräge und wird gemeinsam mit den Federschenkeln 10 nach außen gedrückt. Anstelle eines mit einem Schraubgewinde versehenen Bolzens 16 kann auch ein axial gleitend verschiebbarer Bolzen vorgesehen sein, der in seiner vorgeschobenen Position gegen ein Zurückgleiten gesichert ist.

In der Figur sind für jedes der Ankerteile 6 zwei Positionen a und b eingezeichnet. Mit der Position a ist die Ausgangsposition dargestellt, die sich ergibt, wenn der Schraubbolzen 16 die Kante 20 berührt. Weiteres Einschrauben führt dann zu einem seitlichen Ausstellen der Federschenkel 10, wie dies durch die Position b veranschaulicht ist.

Die Außenabmessungen der Federschenkel 10 im Bereich zwischen Freiende und Schulter 12 sind so bemessen, dass bereits beim Einführen des Ankerteils 6 in eine Durchgangsöffnung 30 eines Strukturelementes 32 eines Einbauteils, bei dem es sich im Ausführungsbeispiel um den obersten gitterförmigen Abstandhalter eines Brennelementskelettes handelt, die Federschenkel 10 radial nach innen gedrückt werden. Sobald die Schulter 12 der Federschenkel 10 die Unterkante des Strukturelementes 32 erreicht, schnappen die Federschenkel radial nach außen und hintergreifen das Strukturelement 32, so dass bereits ohne weitere Maßnahme eine Verankerung vorliegt und das Einbauteil auf Zug belastet werden kann. Die Federschenkel 10 sind an ihrem Außenumfang bis zur Schulter 12 nach innen konisch geformt, so dass nach dem Aufschnappen noch ein Freiraum oder Spalt s zwischen Außenumfang der Federschenkel 10 im Bereich zwischen Schulter 12 und Anschnitt 8 verbleibt, der mit zunehmenden Abstand vom Abschnitt 8 zunimmt. Dieser Freiraum s ermöglicht ein weiteres Aufstellen der Federschenkel 10 durch Vorschub des Bolzens 16, so dass die hintergriffene Fläche vergrößert wird.

Der Abstand zwischen Schulter 12 und Ringflansch 15 des hülsenförmigen Abschnittes ist dabei so bemessen, dass Schulter 12 und Ringflansch 15 weitgehend spielfrei an der Unterkante bzw. der Oberkante des Strukturelementes 32 anliegen. Um das Einführen der Federschenkel 10 in die Durchgangsöffnung 30 zu erleichtern, sind diese mit einer Einführkrümmung oder - schräge versehen. Die Anordnung (Abstand) und Baulänge der Ankerteile 6 sind an das jeweilige Strukturelement 32 angepasst.

In der Figur ist außerdem zu erkennen, dass eines der Ankerteile 6 länger ist als das andere. Dadurch wird das Einführen zweier oder mehrerer Ankerteile 6 in eine entsprechende Anzahl von Durchgangsöffnungen 30 des Strukturelementes 32 erleichtert, so dass zunächst nur das längere Ankerteil 6 in eine der Durchgangsöffnungen 30 eingeführt werden muss und anschließend lediglich durch eine einzige Schwenkbewegung die anderen Durchgangsöffnungen angesteuert werden müssen.

In Fig. 2 ist bei der Anwendung als Halteelement für ein Brennelementskelett veranschaulicht, in welche Zelle (Durchgangsöffnung) des oberen Abstandhalters (Strukturelementes 32) die Ankerteile 6 eingeführt werden.

Die Gestaltung des Ankerteils 6 sowie des Bolzens 16 ist in Fig. 3a und b deutlicher zu erkennen. Bei dem Ankerteil 6 handelt es sich um ein einstückiges hülsenförmiges Drehteil aus dem die Federschenkel 10 durch Einbringen von Längsschlitzen herausgebildet sind.

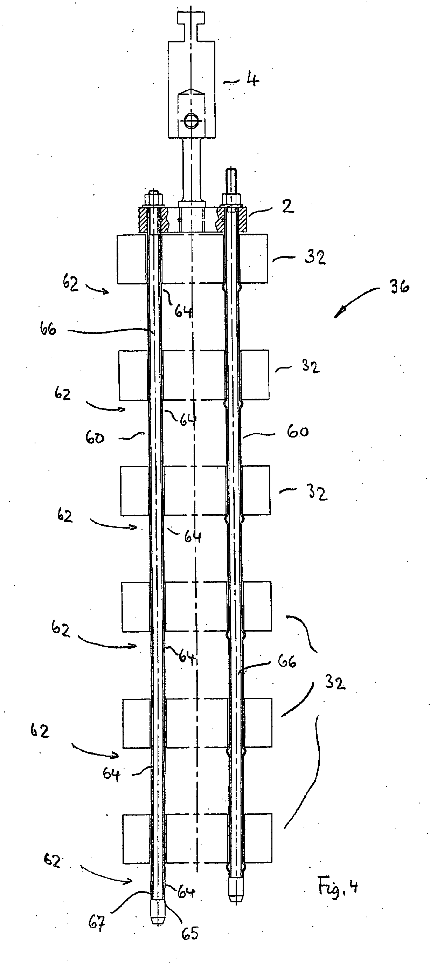

Gemäß Fig. 4 umfasst ein Halteelement Ankerteile 60, die eine Mehrzahl von in Axialrichtung der Ankerteile 60 hintereinander angeordneten Strukturelementen 32 durchsetzen. Bei diesen Strukturelementen 32 handelt es sich im Ausführungsbeispiel um die Abstandhalter eines Brennelementskelettes 36, die untereinander durch in der Figur nicht dargestellte Strukturrohre (Stützrohre, Instrumentierungsrohre, Steuerstabführungsrohre, Wasserrohre) fest verbunden sind. Das Ankerteil 60 wird durch eine Hülse gebildet, die in vorgegebenen Abständen jeweils Abschnitte 62 aufweist, in denen sie durch das Einbringen einer Mehrzahl von Längsschlitzen 64 mit einer Wandschwächung versehen ist. Durch das hülsenförmige Ankerteil 60 ist ein über dieses vorstehender und mit einer Ringschulter 65 versehener Bolzen 66 geführt, auf der sich das Ankerteil 60 mit seiner der Stützplatte 2 abgewandten Stirnfläche 67 abstützt, so dass der Bolzen 66 das Ankerteil hintergreift. Der Bolzen 66 durchsetzt die Stützplatte 2 und kann mit Hilfe einer Mutter 68 axial auf Zug beansprucht werden, so dass auf das Ankerteil 60 eine Druckkraft wirkt, die das Ankerteil 60 jeweils im Bereich der Abschnitte 62 plastisch nach außen verformt und dabei eine Verkürzung des Ankerteils 60 bewirkt. Bei entsprechender Auslegung der Abschnitte 62 und ihres gegenseitigen Abstandes bilden diese ein Anschlagelement, das, wie dies im rechten Teil der Figur dargestellt ist, das ihnen jeweils zugeordnete Strukturelement 32 hintergreift.

Ein solches Halteelement ist besonders geeignet für das Greifen und den Transport sowie für die Durchführung weiterer mechanischer Arbeitsschritte an einem durch Bestrahlung spröde gewordenen Brennelementskelett 36, da auf diese Weise sichergestellt ist, dass ein Zerbrechen des Brennelementskelettes 36, beispielsweise bei der Durchführung von Press- oder Schneidvorgängen, nicht zu seinem Auseinanderbrechen führt.

In dem im linken Teil der Figur dargestellten Ausgangszustand ist zu erkennen, dass der Abstand der noch nicht verformten Abschnitte 62 zur Unterkante des Strukturelements 32 mit wachsendem Abstand von der Stützplatte 2 zunimmt. Auf diese Weise kann sichergestellt werden, dass eine sich gleichzeitig an allen Abschnitten 62 ausbildende und zu einer Verkürzung des Ankerteils 60 führende Verformung mit den jeweiligen Strukturelemente 32 in Wirkverbindung gebracht wird, da der sich durch die radiale Verformung in Axialrichtung ergebende Verformungsweg mit wachsendem Abstand von der Stützplatte 2 zunimmt. Um sicherzustellen, dass alle Abschnitte 62 eine Verformung erfahren, ist in einer besonders vorteilhaften Ausgestaltung vorgesehen, dass die Querschnitte oder Anzahl der Längsschlitze 64 oder die Wandstärke der zwischen diesen verbleibenden Stege in Abhängigkeit von ihrer Entfernung zur Stützplatte 2 derart variiert werden, dass zunächst nur der der Stützplatte 2 nächstliegende Abschnitt 62.gestaucht wird. Dadurch gelangt der nächste Abschnitt 62 in die richtige Position unterhalb des Strukturelementes 32. Bei weiterer Zunahme der Presskraft erfolgt nun eine Stauchung ausschließlich dieses Abschnittes 62. Auf diese Weise werden sukzessive alle Abschnitte 62 bis zum untersten Abschnitt 62 gestaucht und in Hintergriff mit dem jeweiligen Strukturelement 32 gebracht.

Das in der Figur dargestellte und auf einer plastischen Verformung einer einer über das Strukturelement vorstehenden Anschlagelementes beruhende Verankerungsprinzip des Ankerteils 60 ist grundsätzlich auch auf ein Ankerteil übertragbar, das nur ein, beispielsweise das oberste Strukturelement 32 durchsetzt. Grundsätzlich ist es auch möglich, eine Wandschwächung im Abschnitt 62 ausschließlich durch eine Reduktion der Wanddicke, d.h. ohne das Einbringen von Längsschlitzen herbeizuführen.

## Patentansprüche

1. Halteelement zum Greifen und Transportieren eines Einbauteils eines Kernreaktors, das ein von außen zugängliches Strukturelement (32) mit zumindest einer Durchgangsöffnung (30) umfasst, mit einer Stützplatte (2), die an einem Kupplungsteil (4) zum Ankuppeln an eine Transportvorrichtung angeordnet ist, und die zumindest ein hohles Ankerteil (6, 60) enthält, das auf der dem Kupplungsteil gegenüberliegenden Seite der Stützplatte (2) vorsteht und derart bemessen ist, dass es in die zumindest eine Durchgangsöffnung (30) des Strukturelementes (32) eingeführt werden kann, wobei das Ankerteil (6, 60) zumindest ein nach außen ausstellbares Anschlagelement (10, 62) enthält, das bei eingeführtem Ankerteil (6, 60) und im ausgestellten Zustand das Strukturelement (32) hintergreift.

2. Haltelement nach Anspruch 1, bei dem eine Mehrzahl von Ankerteilen (6, 60) vorgesehen sind, die derart zueinander angeordnet sind, dass sie in eine entsprechende Mehrzahl von Durchgangsöffnungen (30) des Strukturelementes (32) eingeführt werden können.

3. Halteelement nach Anspruch 1 oder 2, bei dem das Ankerteil (60) eine Hülse ist, die auf einem als Anschlagelement dienenden Abschnitt (62) mit einer Wandschwächung versehen ist.

4. Halteelement nach Anspruch 3, bei dem der Abschnitt (62) mit einer Mehrzahl von Längsschlitzen (64) versehen ist.

5. Halteelement nach Anspruch 3 oder 4, bei dem das Ankerteil (60) mit einer Durchgangsöffnung (13) in der Stützplatte (2) fluchtet, in die ein Bolzen (66) eingeführt ist, der das Ankerteil (60) durchsetzt und an seiner der Stützplatte (2) abgewandten Stirnfläche (67) hintergreift und bei Ausüben einer axialen Druckkraft den Abschnitt (62) plastisch nach außen verformt.

6. Halteelement nach Anspruch 1 oder 2, bei dem das Anschlagelement durch zumindest zwei Federschenkel (10) gebildet ist, die an ihrem freien Ende mit einer außenliegenden Schulter (12) versehen sind.

7. Halteelement nach Anspruch 6, bei dem das hohle Ankerteil (6) mit einer Durchgangsbohrung (13) in der Stützplatte (2) fluchtet, in die ein Bolzen (16) eingeführt ist, der an seinem freien Ende eine Gleitschräge aufweist, die entlang einer am Innenumfang der Federschenkel (10) angeordneten Kante (20) gleitet und der bei einer Axialverschiebung die Federschenkel (10) nach außen spreizt.

8. Halteelement nach Anspruch 7, bei dem der Bolzen (16) in die Durchgangsbohrung (13) eingeschraubt ist und an seinem freien Ende konisch geformt ist.

9. Halteelement nach Anspruch 8, bei dem das Ankerteil (6) mit einem von den Federschenkel (10) abgewandten hülsenförmigen Abschnitt (8) in die Durchgangsbohrung (13) eingesetzt ist.

10. Halteelement nach einem der vorhergehenden Ansprüche, bei dem eines der Ankerteile (6, 60) mit einem größeren Abstand über die Stützplatte (2) vorsteht als das oder die anderen Ankerteile (6, 60).

11. Halteelement nach einem der Ansprüche 6 bis 10, bei dem die Federschenkel (10) an ihrem Außenumfang einen Einführkrümmung oder -schräge aufweisen.

12. Halteelement nach einem der Ansprüche 1 bis 5, bei dem das Ankerteil (60) eine Mehrzahl von in seiner Axialrichtung hintereinander angeordneten ausstellbaren Anschlagelementen aufweist.
